# EUROPÄISCHE PATENTSCHRIFT

(11) **EP 0 930 485 B1**
(45) Veröffentlichungstag und Bekanntmachung des Hinweises auf die Patenterteilung: **09.07.2008**
(21) Anmeldenummer: 98122789.5
(22) Anmeldetag: 01.12.1998
(51) Int. Cl.: G01J 3/453, G01J 9/02

(54) **Vorrichtung zur Erfassung oder Erzeugung optischer Signale**
Device to detect or to create optical signals
Dispositif pour détecter ou générer des signaux optiques

(30) Priorität: 16.01.1998 DE 19801469
(43) Veröffentlichungstag der Anmeldung: 21.07.1999
(73) Patentinhaber: Campus Technologies AG, 6300 Zug (CH)
(72) Erfinder:
(74) Vertreter: Laufhütte, Dieter

(56) Entgegenhaltungen:
- EP-A- 0 297 556
- DE-A- 3 820 170
- US-A- 5 059 027
- US-A- 5 313 266
- PATENT ABSTRACTS OF JAPAN vol. 016, no. 247 (P-1365), 5. Juni 1992 (1992-06-05) & JP 04 055726 A (CANON INC), 24. Februar 1992 (1992-02-24)

## Beschreibung

Die vorliegende Erfindung betrifft eine Vorrichtung zur Erfassung optischer Signale mit Mitteln zur Erzeugung wenigstens eines Referenz-Lichtstrahls, der gegenüber dem zu erfassenden optischen Signal frequenzverschoben und/oder -moduliert oder phasenverschoben und/oder -moduliert und/oder zeitverschoben ist, mit Mitteln, mit denen das zu erfassende optische Signal und/oder der oder die Referenz-Lichtstrahlen derart ausrichtbar sind, daß sie zur Interferenz gebracht werden können, sowie mit mindestens einem Detektor mit Demodulator, durch den eine Amplitudenmodulation nachweisbar ist.

Die Erfindung betrifft ferner eine Vorrichtung zur Erzeugung optischer Signale durch Modulation optischer Träger mit Mitteln zur Erzeugung wenigstens eines Referenz-Lichtstrahls, der gegenüber dem zu modulierenden optischen Träger frequenzverschoben und/oder -moduliert oder phasenverschoben und/oder -moduliert und/oder zeitverschoben ist, mit Mitteln mit denen das zu erfassende optische Signal und/oder der oder die Referenz-Lichtstrahlen derart ausrichtbar sind, daß sie zur Interferenz gebracht werden können, sowie mit mindestens einem Koppler, durch den das resultierende Interferenzsignal auskoppelbar ist.

Die Erfindung betrifft weiterhin die Verwendung einer erfindungsgemäßen Vorrichtung als optischer Empfänger oder optischer Modulator oder als Spektrometer.

Die optische Informationsübertragung basiert auf verschiedenen Verfahren, die jeweils auf der Modulation bestimmter Eigenschaften der optischen Trägerwelle beruhen. Bei der Verwendung eines Lasers als Lichtquelle kann Information durch zeitliche Modulation der Amplitude, der Frequenz, der Phase oder der Polarisation der Lichtquelle erfolgen, wobei eine Modulation der Polarisation aufgrund technischer Schwierigkeiten bei der Übertragung in optischen Fasern nur in speziellen Fällen angewendet wird. Das wesentliche Element derartiger Verfahren zur optischen Informationsübertragung ist der optische Empfänger, der in der Lage sein muß, die jeweilige Modulation auch bei geringster Intensität des empfangenen Signals innerhalb kürzester Zeit zu erkennen.

Das einfachste Verfahren (direct detection) besteht in der Messung der Intensität des einfallenden optischen Trägers. Entsprechend kann als Modulationsverfahren in diesem Fall nur eine Modulation der Intensität, d.h. eine Amplitudenmodulation (amplitude shift keying, ASK) verwendet werden. Darüber hinaus kann eine sehr starke Modulation der Frequenz des optischen Trägers vom Empfänger mit Hilfe eines oder mehrerer geeigneter optischer Filter ebenfalls direkt als Amplitudenmodulation nachgewiesen werden.

Die Modulationsarten Phasen- und Frequenzmodulation erfordern im Empfänger die Überlagerung des zu erfassenden, einfallenden optischen Signals mit einer lokalen Referenz-Lichtquelle (local oscillator, LO). Dabei wird unterschieden in homodyne Detektion und heterodyne Detektion, wobei im ersten Fall die Referenz-Lichtquelle die gleiche und im zweiten Fall eine andere Frequenz als das zu erfassende optische Signal aufweist. Beim sogenannten quasi-heterodyne Detektionsverfahren wird lediglich die Phasenlage der Referenz-Lichtquelle variiert. Die Überlagerung von optischem Signal und Licht der Referenz-Lichtquelle führt zu einem Interferenzsignal, aus dem je nach Anordnung die Amplitude und Phase oder Frequenz des zu erfassenden Signals bezogen auf die lokale Referenzquelle ableitbar sind.

Ferner wird unterschieden zwischen kohärenten (coherent detection) und nicht kohärenten (noncoherent detection) Empfängern. Während bei der kohärenten Detektion die Modulation des Interferenzsignals mit Amplitude und Phasenlage ausgewertet wird, erfolgt bei der nicht kohärenten Detektion lediglich die Erfassung der Intensität der Modulation, d.h. in diesem Fall wird die Hüllkurve des Interferenz-Signals betrachtet. Im Fall der kohärenten Detektion muß die lokale Referenzquelle nach Frequenz und Phasenlage stabilisiert bzw. dem einfallenden optischen Träger nachgeführt werden, während bei der nicht kohärenten Detektion eine Kontrolle der Frequenz der lokalen Referenz-Lichtquelle ausreicht.

Die homodyne Detektion erlaubt die Messung der Phase und damit der Phasenmodulation (phase shift keying, PSK) der optischen Trägerwelle, heterodyne Detektion ermöglicht auch den Nachweis von Phasensprüngen der optischen Trägerwelle (differential phase shift keying, DPSK). Die heterodyne Detektion wird auch für die Detektion einer Frequenzmodulation (frequency shift keying, FSK) eingesetzt. In diesem Fall können die verschiedenen Frequenzen elektronisch im Interferenzsignal nachgewiesen werden. Sowohl die direkte Detektion (ASK) als auch die heterodynen Verfahren können mehrere im Radiowellenbereich aufmodulierte Sub-Träger übertragen (subcarrier modulation, SCM). Die SCM-Verfahren gewinnen mit steigender Bandbreite der realisierbaren Einzelverbindungen an Bedeutung, da ein einzelner optischer Kanal für mehrere unabhängige Datenströme genutzt werden kann.

Unter anderen ergeben sich folgende Möglichkeiten:
- direct detection: ASK
- heterodyne, noncoherent detection: ASK, FSK, DPSK
- heterodyne, coherent detection: ASK, FSK, PSK
- homodyne, coherent detection: ASK, PSK

Die Bandbreite des übertragbaren Signals, wie auch der technische Aufwand wachsen entsprechend dieser Liste. Auf der Seite des Empfängers bedeutet coherent detection, insbesondere homodyne coherent detection, einen hohen technischen Aufwand aufgrund der erforderlichen Stabilisierung der lokalen Referenz-Lichtquelle.

Um den Bereich zwischen elektronisch noch handhabbaren und bearbeitbaren Bandbreiten (< 1 GHz) und der Übertragungskapazität der optischen Systeme abzudecken, können mehrere optische Träger unterschiedlicher Wellenlängen verwendet werden, die gemeinsam das optische System verwenden aber einzeln von jeweils unabhängigen Sendern/Empfängern genutzt werden. Sofern eine ausreichend hohe Wellenlängenselektivität erreicht werden kann, erlaubt dieses wavelength division multiplexing-Verfahren (WDM), eine für die jeweilige Anwendung und Technologie geeignete Bandbreite für die Modulation der einzelnen optischen Träger zu wählen, ohne die Übertragungskapazität des optischen Systems wesentlich einzuschränken (high density wavelength division multiplexing, hd-WDM). Ein besonders interessanter Anwendungsbereich sind optische Mehrkanalnetzwerke, da die Fähigkeit der Empfänger, einen einzelnen Kanal zu selektieren, zu einer wesentlichen Vereinfachung der Verteilerknoten im Netzwerk führt. (Tunable channel multi Access Networks, TCMA).

Der physikalische Zusammenhang zwischen der Größe eines optischen Elements und seinem maximal möglichen spektralen Auflösungsvermögen erlaubt räumlich kleinen Elementen eine spektrale Auflösung im GHz-Bereich nicht. Homodyne und heterodyne Detektion unter Verwendung einer lokalen Referenz-Lichtquelle erlauben zwar eine sehr hohe spektrale Auflösung, jedoch erfordert die Kontrolle der Referenz-Lichtquelle einen hohen technischen Aufwand.

Die japanische Patentanmeldung JP 04055726 offenbart ein Fourier Spektroskop. Das US Patent US 5059027 und die europäische Patentanmeldung EP 0297556 beschreiben heterodyne Spektroskope.

Es ist daher die Aufgabe der vorliegenden Erfindung, eine gattungsgemäße Vorrichtung zur Erfassung oder Erzeugung optischer Signale dahingehend weiterzubilden, daß sie auch bei Einsatz relativ kleiner optischer Elemente ein hohes spektrales Auflösungsvermögen aufweist wobei die Wellenlänge des zu empfangenden oder zu modulierenden optischen Trägers frei wählbar sein soll, ohne daß ein hoher technischer Aufwand für die Kontrolle einer lokalen Referenz-Lichtquelle entsteht.

Diese Aufgabe wird erfindungsgemäß dadurch gelöst, daß mindestens ein wellenlängenabhängiges Element vorgesehen ist, durch das der oder die Winkel der zur Interferenz gebrachten Lichtstrahlen in Abhängigkeit von der Wellenlänge veränderbar sind, und ein drehbar gelagerter Spiegel zur Justierung der zu erfassenden Wellenlänge, und ein drehbar gelagerter Spiegel zur Justierung der zu erfassenden wellenlängen sowie, daß mindestens einer der Detektoren derart ausgeführt ist oder derart im Zusammenhang mit einem Demodulator und/oder optischen Elementen steht, daß eine zeitliche und/oder räumliche Modulation der Intensität bezogen auf den gesamten oder Teile des detektierten Strahlquerschnitts meßbar ist.

Wird in der ansonsten unveränderten Vorrichtung anstelle der oder mindestens eines der Detektoren ein Koppler eingefügt, ist die Vorrichtung zur Erzeugung optischer Signale durch Modulation optischer Träger und somit als Modulator verwendbar. Ausgehend von einer gattungsgemäßen Vorrichtung zur Erzeugung optischer Signale durch Modulation optischer Träger wird die zugrundeliegende Aufgabe dadurch gelöst, daß mindestens ein wellenlängenabhängiges Element vorgesehen ist, durch das der oder die Winkel der zur Interferenz gebrachten Lichtstrahlen in Abhängigkeit von der Wellenlänge veränderbar sind, sowie, daß mindestens einer der Koppler derart ausgeführt ist oder derart im Zusammenhang mit einem Demodulator und/oder optischen Elementen steht, daß das ausgekoppelte Signal von der zeitlichen und/oder räumlichen Modulation der Intensität bezogen auf den gesamten oder Teile des erfaßten Strahlquerschnitts abhängig ist.

Gemäß einer bevorzugten Ausgestaltung der vorliegenden Erfindung umfassen die Mittel zur Erzeugung wenigstens eines Referenz-Lichtstrahls, der gegenüber dem zu erfassenden optischen Signal frequenzverschoben und/oder -moduliert oder phasenverschoben und/oder -moduliert und/oder zeitverschoben ist, einen Strahlteiler sowie einen Frequenzschieber und/oder -modulator oder einen Phasenschieber und/oder -modulator und/oder eine Laufstrecke. Diese Ausgestaltung ist vorteilhaft, da auf eine lokale Lichtquelle verzichtet werden kann. Durch den Verzicht auf den lokalen Oszillator wird die Anordnung technisch erheblich einfacher, erlaubt aber dennoch eine hohe spektrale Auflösung.

Die Mittel zur Erzeugung wenigstens eines Referenz-Lichtstrahls, der gegenüber dem zu erfassenden optischen Signal frequenzverschoben und/oder -moduliert oder phasenverschoben und/oder -moduliert und/oder zeitverschoben ist, können eine lokale Lichtquelle umfassen.

In weiterer Ausgestaltung der vorliegenden Erfindung ist vorgesehen, daß mindestens eines der wellenlängenabhängigen Elemente ein diffraktives optisches Element umfaßt, insbesondere ein optisches Gitter, ein Hologramm oder ein System dünner Schichten.

Mindestens eines der wellenlängenabhängigen Elemente kann ein dispersives optisches Element umfassen, insbesondere ein Prisma.

Besonders vorteilhaft ist es, wenn das oder mindestens eines der wellenlängenabhängigen Elemente als Strahlteiler oder Combiner ausgeführt ist.

Gemäß einer bevorzugten Ausgestaltung der vorliegenden Erfindung ist mindestens eines der wellenlängenabhängigen Elemente derart ausgeführt, daß die Art oder der Grad der Abhängigkeit der Winkelablenkung von der Wellenlänge veränderbar ist. Insbesondere ist eine Ausführung als Akusto-optischer Modulator möglich.

Das wellenlängenabhängige Element kann gleichzeitig als Frequenz-Schieber und/oder -Modulator oder Phasen-Schieber und/oder -Modulator ausgeführt sein. Eines oder mehrere der wellenlängenabhängigen Elemente kann als Akustooptischer Modulator ausgeführt sein.

Besonders vorteilhaft ist es, wenn Mittel vorgesehen sind, durch die der Referenz-Lichtstrahl und/oder das optische Signal ablenkbar sind.

Ferner kann mindestens eines der wellenlängenabhängigen Elemente drehbar und/oder schwenkbar angeordnet sein. Bei Ausführungsvarianten, die von einer Vorrichtung gemäß Anspruch 3 ableitbar sind, kann die Wellenlänge des zu demodulierenden Signals durch Veränderung der Geometrie frei eingestellt werden. Insbesondere ist in verschiedenen Varianten der Vorrichtung die Wellenlängenabstimmung durch einfaches Drehen eines der optischen Elemente möglich.

In weiterer Ausgestaltung der vorliegenden Erfindung ist mindestens ein Multiplex-Hologramm vorgesehen und/oder andere optische Elemente, durch die mehrere Strahlen gleichzeitig handhabbar sind. Unter Verwendung von Multiplex-Hologrammen kann gegebenenfalls mit Hilfe zusätzlicher Detektoren auf mehreren Kanälen gleichzeitig empfangen werden

Gemäß einer bevorzugten Ausgestaltung der vorliegenden Erfindung sind Teile der Vorrichtung mehrfach vorgesehen und/oder durch Teile der genannten Vorrichtungen sind mehrere Strahlen handhabbar.

Besonders vorteilhaft ist es, wenn Mittel zur Veränderung des Strahlquerschnitts mindestens eines der beteiligten Strahlen vorgesehen sind. Dabei muß der einfallende Strahl nicht unbedingt vor Eintritt in die Apparatur aufgeweitet werden. Je nach Anordnung der dispersiven bzw. diffraktiven Elemente kann die Strahlaufweitung an verschiedenen Stellen auch innerhalb der Vorrichtung erfolgen. Die spektrale Auflösung der Apparatur steigt mit dem Strahldurchmesser, insbesondere mit dem Strahldurchmesser in der Ebene der Winkelablenkung der wellenlängenabhängigen Elemente.

In weiterer Ausgestaltung der vorliegenden Erfindung können Mittel zur spektralen Filterung oder räumlichen Modulation von Phase oder Amplitude mindestens eines der beteiligten Strahlen vorgesehen werden. Eine geeignete Auslegung des Strahlprofils kann die spektrale Auflösung weiter verbessern.

Besonders vorteilhaft ist es, wenn alle oder ein Teil der beteiligten Strahlen ganz oder teilweise durch Lichtleiter geführt werden und/oder, wenn alle oder ein Teil der optischen Elemente durch Mittel der integrierten Optik gebildet werden.

Die Erfindung bezieht sich ferner auf die Verwendung einer erfindungsgemäßen Vorrichtung als optischer Empfänger oder optischer Modulator oder als Spektrometer. Der Einsatz als Spektrometer beruht auf der Wellenlängen-Selektivität der erfindungsgemäßen Vorrichtung.

Weitere Einzelheiten und Vorteile der erfindungsgemäßen Vorrichtung werden anhand eines in der Zeichnung dargestellten Ausführungsbeispiels näher erläutert. Es zeigen:
- Fig. 1:: die räumliche und zeitliche Modulation der Intensität am Ort eines Detektors,
- Fig. 2.:: einen prinzipiellen Aufbau einer erfindungsgemäßen Vorrichtung unter Verwendung des Strahlengangs eines Michelson-Interferometers,
- Fig. 3:: einen prinzipiellen Aufbau einer erfindungsgemäßen Vorrichtung unter Verwendung des Strahlengangs eines Mach-Zehnder-Interferometers, und
- Fig. 4:: einen prinzipiellen Aufbau einer erfindungsgemäßen Vorrichtung, bei der einer der Teilstrahlen zeitlich verzögert wird.

Das Funktionsprinzip der vorliegenden Erfindung beruht auf der Tatsache, daß die durch den einfallenden Lichtstrahl (zu erfassendes optisches Signal) bzw. durch den ausgekoppelten Lichtstrahl (modulierter optischer Träger) übermittelte Information ausschließlich durch zeitliche Modulation von Amplitude, Wellenlänge oder relativer Phasenlage repräsentiert wird. Die Einfalls- bzw. Ausfallswinkel der Strahlen tragen keine Information, sondern werden im Gegenteil in der Regel konstant gehalten. Weiterhin tragen die Strahlen keinerlei räumliche Modulation.

Die erfindungsgemäße Vorrichtung überträgt die spektralen Eigenschaften des geeignet aufgeweiteten einfallenden Lichtstrahls in den Winkelraum. Die verschiedenen Winkelkomponenten können nun durch Interferenz mit einem geeignet erzeugten Referenzstrahl auf eine räumliche Modulation abgebildet werden, wobei die verschiedenen Winkelkomponenten ein jeweils charakteristisches Interferenzmuster zeigen. Durch ein heterodyne oder quasi-heterodyne Verfahren können zu bestimmten Winkelkomponenten passende Interferenzmuster mit hoher Selektivität und Empfindlichkeit detektiert werden.

Im Unterschied zu gewöhnlichen Spektrometern mit dispersiven oder diffraktiven Elementen müssen bei diesem neuen Verfahren die verschiedenen spektralen Komponenten zur Detektion nicht räumlich getrennt werden.

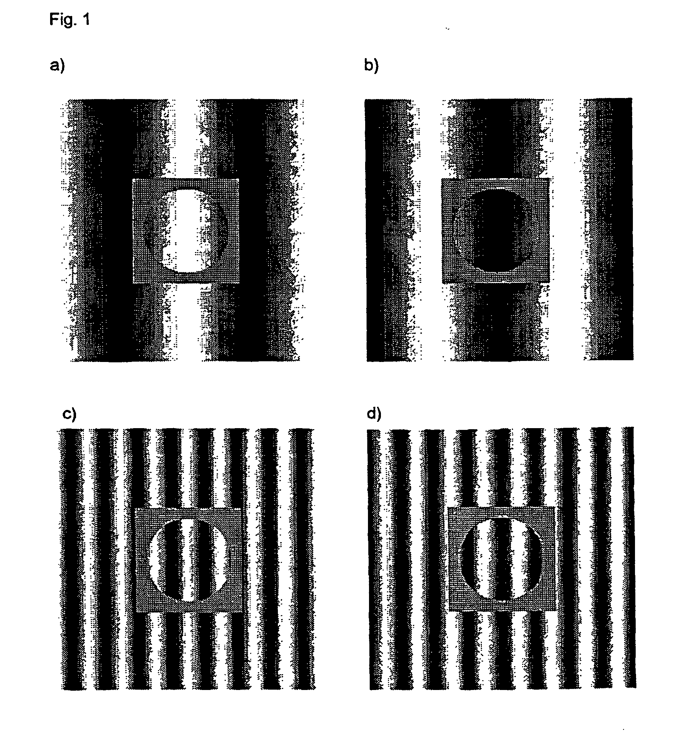

Zur Erläuterung zeigt Fig. 1 die für eine einfache Anordnung mit ebenen Wellen resultierende räumliche und zeitliche Modulation der Intensität am Ort eines der Detektoren. Ist die Vorrichtung auf die Wellenlänge des einfallenden Lichtstrahls eingestellt, wird die Periode der räumlichen Modulation des am Detektor anliegenden Interferenzmusters sehr groß. Insbesondere kann die räumliche Periode dieses Interferenzmusters größer werden, als der vorn Detektor erfaßte Strahlquerschnitt. Die Fig. 1a) und 1b) zeigen diese Situation für zwei Zeitpunkte mit um π unterschiedlicher relativer Phasenlage der Teilstrahlen. Der markierte Bereich im Zentrum der dargestellten Interferenzmuster stellt den vom Detektor erfaßten Bereich der Strahlen dar.

Eine Veränderung der relativen Phasenlage der Teilstrahlen führt zu einer lateralen Verschiebung des Interferenzmusters. In der gezeigten Situation führt dies zu einer sehr starken zeitlichen Modulation der über die erfaßte Fläche integrierten Intensität.
Bereits sehr kleine Abweichungen der Wellenlänge des einfallenden Lichtstrahls führen zu einer starken Verkleinerung der Periode des jeweiligen Interferenzmusters. Fig. 1c) und 1d) zeigt eine derartige Situation für zwei Zeitpunkte mit um π unterschiedlicher relativer Phasenlage der Teilstrahlen. Die vom Detektor erfaßte Fläche überlappt mehrere helle und dunkle Streifen. Mit steigender Anzahl der Streifen nimmt die bei lateralen Verschiebung des Interferenzmusters. meßbare zeitliche Modulation des über die erfaßte Fläche integrierten Interferenzsignals schnell ab.

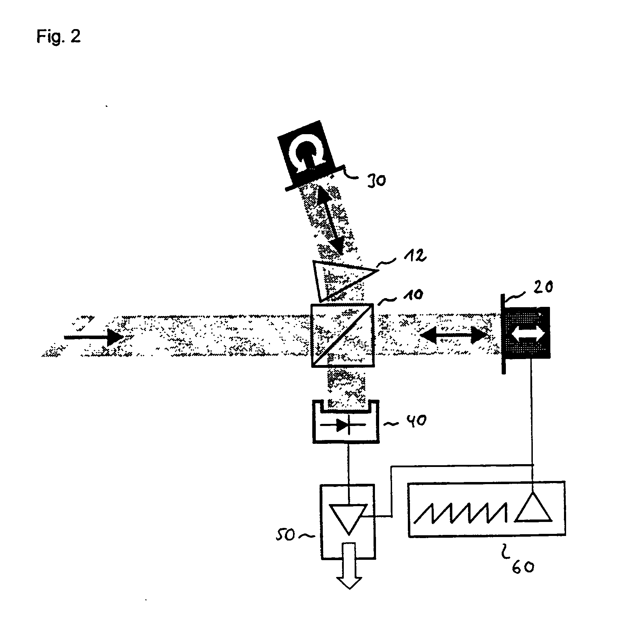

Fig. 2 zeigt den prinzipiellen Aufbau einer einfachen Ausführungsform einer erfindungsgemäßen Vorrichtung unter Verwendung des Strahlenganges eines Michelson-Interferometers mit dem Strahlteiler 10. Als wellenlängenabhängiges Element wird ein Prisma 12 verwendet. Einer der Spiegel 20 bildet durch geeignete Mittel zur Verschiebung dieses Spiegels einen Phasen-Modulator, der andere Spiegel 30 ist zur Justierung der zu erfassenden Wellenlänge in geeigneter Weise drehbar gelagert. Der Detektor 40 ist flächig ausgebildet und integriert die Intensität über den gesamten Querschnitt des erfaßten Strahls. Als Demodulator 50 wird ein Lock-In-Verstärker verwendet. Zur Steuerung des als Phasen-Modulator ausgeführten Spiegels 20 wird die Modulator-Steuerung 60 verwendet.

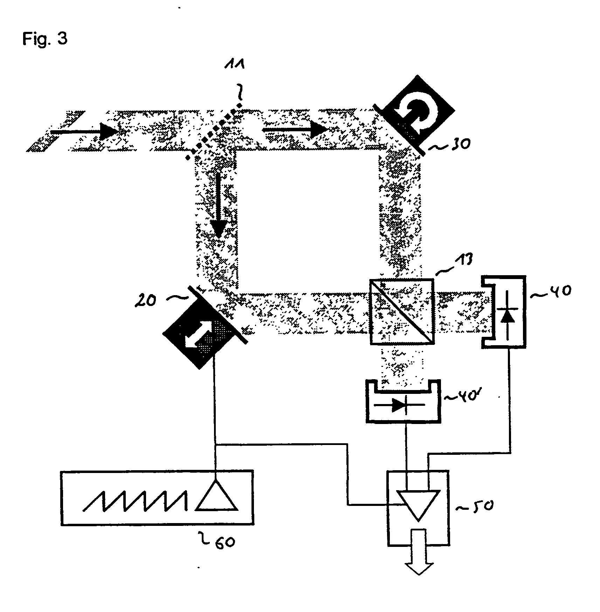

Fig. 3 zeigt den prinzipiellen Aufbau einer einfachen Ausführungsform einer erfindungsgemäßen Vorrichtung unter Verwendung des Strahlenganges eines Mach-Zehnder-Interferometers. Der erste Strahlteiler 11 ist als diffraktives optisches Element ausgeführt und bildet so selbst das wellenlängenabhängige Element. Einer der Spiegel 20 bildet durch geeignete Mittel zur Verschiebung dieses Spiegels 20 einen Phasen-Modulator, der andere Spiegel 30 ist zur Justierung der zu erfassenden Wellenlänge in geeigneter Weise drehbar gelagert. Die durch den zweiten Strahlteiler 13 (Combiner) zur Interferenz gebrachten Teilstrahlen werden von zwei Detektoren 40, 40' erfaßt. Die Detektoren 40, 40 ' sind flächig ausgebildet und integrieren die Intensität über den gesamten Querschnitt des jeweils erfaßten Strahls. Als Demodulator 50 wird ein Lock-In-Verstärker mit Differenzeingang verwendet. Zur Steuerung des als Phasen-Modulator ausgeführten Spiegels 20 wird die Modulator-Steuerung 60 verwendet.

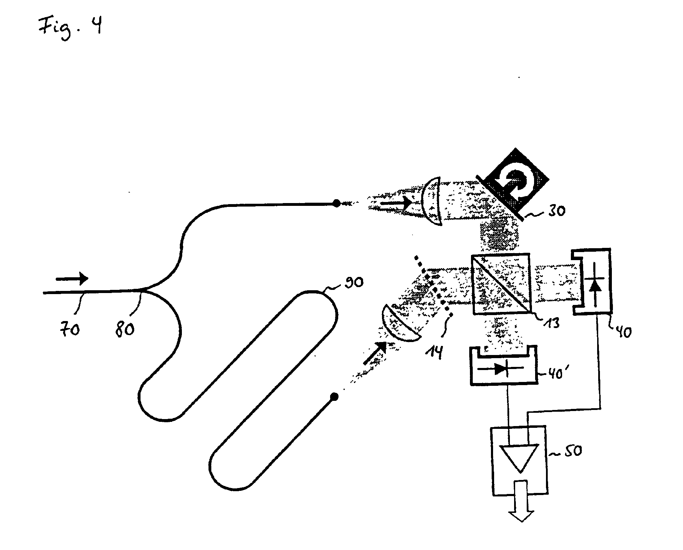

Fig. 4 zeigt den prinzipiellen Aufbau einer Ausführungsform der erfindungsgemäßen Vorrichtung mit einer zeitlichen Verschiebung zwischen Referenz und Signalstrahl. Die Veränderung der relativen Phasenlage zwischen den Teilstrahlen wird durch eine zeitliche Verschiebung eines der Teilstrahlen (Verzögerung durch längere Laufzeit) erreicht, wobei in diesem Fall eine geeignete Phasen- oder Frequenz-Modulation des Signals vorausgesetzt wird. Das einfallende Signal wird durch ein Glasfaser 70 geführt. Der erste Strahlteiler 80 ist mit Mitteln der Glasfasertechnik ausgeführt. Ein Teil des Signals wird nach kurzer Laufzeit aufgeweitet und über einen zur Justierung der zu erfassenden Wellenlänge in geeigneter Weise drehbar gelagerten Spiegel 30 auf den konventionell ausgeführten zweiten Strahlteiler 13 geführt. Der andere Strahl wird durch eine geeignet dimensionierte Laufstrecke 90 verzögert, dann aufgeweitet und über das hier als diffraktives optisches Element ausgeführte wellenlängenabhängige Element 14 zum zweiten Strahlteiler 13 geführt. Die durch den zweiten Strahlteiler 13 (Combiner) zur Interferenz gebrachten Teilstrahlen werden von Detektoren 40, 40' erfaßt. Die Detektoren 40, 40' sind flächig ausgebildet und integrieren die Intensität über den gesamten Querschnitt des jeweils erfaßten Strahls. Der Demodulator 50 wird elektronisch realisiert und muß abhängig von der Modulationsart des Signals unterschiedlich ausgeführt werden.

## Patentansprüche

1. Vorrichtung zur Erfassung optischer Signale mit
Mitteln (10,11,20, 80) zur Erzeugung wenigstens eines Referenz-Lichtstrahls, der gegenüber dem zu erfassenden optischen Signal frequenzverschoben und/oder -moduliert oder phasenverschoben und/oder -moduliert und/oder zeitverschoben ist,
Mitteln (20,30), mit denen das zu erfassende optische Signal und/oder der oder die Referenz-Lichtstrahlen derart ausrichtbar sind, daß sie zur Interferenz gebracht werden können,
sowie mit mindestens einem Detektor (40) mit Demodulator (50), durch den eine Amplitudenmodulation nachweisbar ist,
**dadurch gekennzeichnet,**
**daß** mindestens ein wellenlängenabhängiges Element (11,12, 14) vorgesehen ist, durch das der oder die Winkel der zur Interferenz gebrachten Lichtstrahlen in Abhängigkeit von der Wellenlänge veränderbar ist daß ein drehbar gelagerter Spiegel (30) zur Justierung der zu erfassenden Wellenlänge vorgesehen ist, sowie,
**daß** mindestens einer der Detektoren (40) derart ausgeführt ist oder derart im Zusammenhang mit einem Demodulator (50) und/oder optischen Elementen steht, daß eine zeitliche und/oder räumliche Modulation der Intensität bezogen auf den gesamten oder Teile des detektierten Strahlquerschnitts meßbar ist.

2. Vorrichtung zur Erzeugung optischer Signale durch Modulation optischer Träger mit
Mitteln zur Erzeugung wenigstens eines Referenz-Lichtstrahls, der gegenüber dem zu modulierenden optischen Träger frequenzverschoben und/oder -moduliert oder phasenverschoben und/oder -moduliert und/oder zeitverschoben ist,
Mitteln mit denen das zu erfassende optische Signal und/oder der oder die Referenz-Lichtstrahlen derart ausrichtbar sind, daß sie zur Interferenz gebracht werden können,
sowie mit mindestens einem Koppler, durch den das resultierende Interferenzsignal auskoppelbar ist,
**dadurch gekennzeichnet,**
**daß** mindestens ein wellenlängenabhängiges Element vorgesehen ist, durch das der oder die Winkel der zur Interferenz gebrachten Lichtstrahlen in Abhängigkeit von der Wellenlänge veränderbar sind daß ein drehbar gelagerter Spiegel (30) zur Justierung der zu erfassenden Wellenlänge vorgesehen ist, sowie,
**daß** mindestens einer der Koppler derart ausgeführt ist oder derart im Zusammenhang mit einem Demodulator und/oder optischen Elementen steht, daß das ausgekoppelte Signal von der zeitlichen und/oder räumlichen Modulation der Intensität bezogen auf den gesamten oder Teile des erfaßten Strahlquerschnitts abhängig ist.

3. Vorrichtung nach Anspruch 1 oder 2, **dadurch gekennzeichnet, daß** die Mittel (10,11,20, 80) zur Erzeugung wenigstens eines Referenz-Lichtstrahls, der gegenüber dem zu erfassenden optischen Signal frequenzverschoben und/oder -moduliert oder phasenverschoben und/oder -moduliert und/oder zeitverschoben ist, einen Strahlteiler sowie einen Frequenzschieber und/oder - modulator oder Phasenschieber und/oder -modulator (20) und/oder eine Laufstrecke (90) umfassen.

4. Vorrichtung nach einem oder mehreren der Ansprüche 1 bis 3, **dadurch gekennzeichnet, daß** die Mittel zur Erzeugung wenigstens eines Referenz-Lichtstrahls, der gegenüber dem zu erfassenden optischen Signal frequenzverschoben und/oder -moduliert oder phasenverschoben und/oder -moduliert und/oder zeitverschoben ist, eine lokale Lichtquelle umfassen.

5. Vorrichtung nach einem oder mehreren der Ansprüche 1 bis 4, **dadurch gekennzeichnet, daß** mindestens eines der wellenlängenabhängigen Elemente (11,12, 14) ein diffraktives optisches Element umfaßt, insbesondere ein optisches Gitter (11, 14), ein Hologramm oder ein System dünner Schichten.

6. Vorrichtung nach einem oder mehreren der Ansprüche 1 bis 5, **dadurch gekennzeichnet, daß** mindestens eines der wellenlängenabhängigen Elemente (11,12, 14) ein dispersives optisches Element umfaßt, insbesondere ein Prisma (12).

7. Vorrichtung nach einem oder mehreren der Ansprüche 1 bis 6, **dadurch gekennzeichnet, daß** mindestens eines der wellenlängenabhängigen Elemente (11,12, 14) als Strahlteiler (11) oder Combiner ausgeführt ist.

8. Vorrichtung nach einem oder mehreren der Ansprüche 1 bis 7, **dadurch gekennzeichnet, daß** mindestens eines der wellenlängenabhängigen Elemente (11,12, 14) derart ausgeführt ist, daß die Art oder der Grad der Abhängigkeit der Winkelablenkung von der Wellenlänge veränderbar ist.

9. Vorrichtung nach einem oder mehreren der Ansprüche 1 bis 8, **dadurch gekennzeichnet, daß** mindestens eines der wellenlängenabhängigen Elemente gleichzeitig als Frequenz-Schieber und/oder -Modulator oder Phasen-Schieber undloder-Modulator ausgeführt ist.

10. Vorrichtung nach Anspruch 9, **dadurch gekennzeichnet, daß** eines oder mehrere der wellenlängenabhängigen Elemente als Akusto-optischer Modulator ausgeführt ist.

11. Vorrichtung nach einem oder mehreren der Ansprüche 1 bis 10, **dadurch gekennzeichnet, daß** Mittel vorgesehen sind, durch die Referenz-Lichtstrahl und/oder das optische Signal ablenkbar sind.

12. Vorrichtung nach einem oder mehreren der Ansprüche 1 bis 11, **dadurch gekennzeichnet, daß** mindestens eines der wellenlängenabhängigen Elemente (11,12, 14) drehbar und/oder schwenkbar angeordnet ist.

13. Vorrichtung nach einem oder mehreren der Ansprüche 1 bis 12, **dadurch gekennzeichnet, daß** mindestens ein Multiplex-Hologramm vorgesehen ist und/ oder andere optische Elemente, durch die mehrere Strahlen gleichzeitig handhabbar sind.

14. Vorrichtung nach einem oder mehreren der Ansprüche 1 bis 13, **dadurch gekennzeichnet, daß** Teile der Vorrichtung mehrfach vorgesehen sind und/oder durch Teile der genannten Vorrichtungen mehrere Strahlen handhabbar sind.

15. Vorrichtung nach einem oder mehreren der Ansprüche 1 bis 14, **dadurch gekennzeichnet, daß** Mittel zur Veränderung des Strahlquerschnitts mindestens eines der beteiligten Strahlen vorgesehen sind.

16. Vorrichtung nach einem oder mehreren der Ansprüche 1 bis 15, **dadurch gekennzeichnet, daß** Mittel zur spektralen Filterung oder räumlichen Modulation von Phase oder Amplitude mindestens eines der beteiligten Strahlen vorgesehen sind.

17. Vorrichtung nach einem oder mehreren der Ansprüche 1 bis 16, **dadurch gekennzeichnet, daß** alle oder ein Teil der beteiligten Strahlen ganz oder teilweise durch Lichtleiter geführt werden, und/oder, daß alle oder ein Teil der optischen Elemente durch Mittel der integrierten Optik gebildet werden.

18. Verwendung einer Vorrichtung nach einem oder mehreren der Ansprüche 1 bis 17 als optischer Empfänger oder optischer Modulator oder als Spektrometer.

## Claims

1. Device for detecting optical signals comprising
means (10, 11, 20, 80) for generating at least one reference light beam which is frequency-shifted and/or frequency-modulated or phase-shifted and/or phase-modulated and/or time-shifted relative to the optical signal to be detected,
means (20, 30) by which the optical signal to be detected and/or the reference light beam or beams can be oriented in such a way that they can be brought to interference,
and also comprising at least one detector (40) with a demodulator (50) by which amplitude modulation can be detected,
**characterized**
**in that** at least one wavelength-dependent element (11, 12, 14) is provided by which the angle or angles of the light beams brought to interference can be altered depending on the wavelength, in that provision is made for a rotatably mounted mirror (30) for adjusting the wavelength to be detected, and
**in that** at least one of the detectors (40) is embodied or is inter-related with a demodulator (50) and/or optical elements in such a way that a temporal and/or spatial modulation of the intensity can be measured relative to the entire or parts of the detected beam cross section.

2. Device for generating optical signals by modulation of optical carriers comprising
means for generating at least one reference light beam which is frequency-shifted and/or frequency-modulated or phase-shifted and/or phase-modulated and/or time-shifted relative to the optical carrier to be modulated,
means by which the optical signal to be detected and/or the reference light beam or beams can be oriented in such a way that they can be brought to interference,
and comprising at least one coupler by means of which the resulting interference signal can be coupled out,
**characterized**
**in that** at least one wavelength-dependent element is provided by which the angle or angles of the light beams brought to interference can be altered depending on the wavelength, in that provision is made for a rotatably mounted mirror (30) for adjusting the wavelength to be detected, and
**in that** at least one of the couplers is embodied or inter-related with a demodulator and/or optical elements in such a way that the coupled-out signal is dependent on the temporal and/or spatial modulation of the intensity relative to the entire or parts of the detected beam cross section.

3. Device according to Claim 1 or 2, **characterized in that** the means (10, 11, 20, 80) for generating at least one reference light beam which is frequency-shifted and/or frequency-modulated or phase-shifted and/or phase-modulated and/or time-shifted relative to the optical signal to be detected comprise a beam splitter and a frequency shifter and/or frequency modulator or phase shifter and/or phase modulator (20) and/or a propagation path (90).

4. Device according to one or more of Claims 1 to 3, **characterized in that** the means for generating at least one reference light beam which is frequency-shifted and/or frequency-modulated or phase-shifted and/or phase-modulated and/or time-shifted relative to the optical signal to be detected comprise a local light source.

5. Device according to one or more of Claims 1 to 4, **characterized in that** at least one of the wavelength-dependent elements (11, 12, 14) comprises a diffractive optical element, in particular an optical grating (11, 14), a hologram or a system of thin layers.

6. Device according to one or more of Claims 1 to 5, **characterized in that** at least one of the wavelength-dependent elements (11, 12, 14) comprises a dispersive optical element, in particular a prism (12).

7. Device according to one or more of Claims 1 to 6, **characterized in that** at least one of the wavelength-dependent elements (11, 12, 14) is embodied as a beam splitter (11) or combiner.

8. Device according to one or more of Claims 1 to 7, **characterized in that** at least one of the wavelength-dependent elements (11, 12, 14) is embodied in such a way that the type or the degree of dependence of the angular deflection on the wavelength can be altered.

9. Device according to one or more of Claims 1 to 8, **characterized in that** at least one of the wavelength-dependent elements is simultaneously embodied as frequency shifter and/or frequency modulator or phase shifter and/or phase modulator.

10. Device according to Claim 9, **characterized in that** one or more wavelength-dependent elements is or are embodied as an acousto-optical modulator.

11. Device according to one or more of Claims 1 to 10, **characterized in that** means are provided by which the reference light beam and/or the optical signal can be deflected.

12. Device according to one or more of Claims 1 to 11, **characterized in that** at least one of the wavelength-dependent elements (11, 12, 14) is arranged in a rotatable and/or pivotable fashion.

13. Device according to one or more of Claims 1 to 12, **characterized in that** at least one multiplex hologram is provided and/or other optical elements by which a plurality of beams can be handled simultaneously.

14. Device according to one or more of Claims 1 to 13, **characterized in that** parts of the device are provided multiply and/or a plurality of beams can be handled by parts of the devices mentioned.

15. Device according to one or more of Claims 1 to 14, **characterized in that** provision is made for means for altering the beam cross section of at least one of the beams involved.

16. Device according to one or more of Claims 1 to 15, **characterized in that** provision is made for means for the spectral filtering or spatial modulation of phase or amplitude of at least one of the beams involved.

17. Device according to one or more of Claims 1 to 16, **characterized in that** all or some of the beams involved are wholly or partly passed through optical waveguides, and/or **in that** all or some of the optical elements are formed by means of the integrated optics.

18. Use of a device according to one or more of Claims 1 to 17 as an optical receiver or optical modulator or as a spectrometer.

## Revendications

1. Dispositif pour la détection de signaux optiques, comprenant
des moyens (10, 11, 20, 80) pour générer au moins un faisceau lumineux de référence, qui est décalé et/ou modulé en fréquence et/ou décalé et/ou modulé en phase et/ou décalé en temps par rapport au signal optique à détecter,
des moyens (20, 30) avec lesquels le signal optique à détecter et/ou le ou les faisceaux lumineux de référence peuvent être orientés de telle sorte qu'ils peuvent être amenés à l'interférence,
et au moins un détecteur (40) avec démodulateur (50), par lequel une modulation d'amplitude peut être mise en évidence,
**caractérisé en ce que**
au moins un élément (11, 12, 14) dépendant de la longueur d'onde est prévu, par lequel le ou les angles des faisceaux lumineux amenés à l'interférence peut(vent) être modifié(s) en fonction de la longueur d'onde, **en ce qu'**un miroir (30) logé de façon rotative est prévu pour l'ajustage de la longueur d'onde à détecter, et
**en ce que** au moins l'un des détecteurs (40) est réalisé ou est en rapport avec un démodulateur (50) et/ou des éléments optiques de telle sorte qu'une modulation dans le temps et/ou dans l'espace de l'intensité peut être mesurée par rapport à l'ensemble de la partie ou des parties de la section de faisceau détectée.

2. Dispositif pour générer des signaux optiques par modulation de supports optiques comprenant
des moyens pour générer au moins un faisceau lumineux de référence, qui est décalé en fréquence et/ou modulé en fréquence ou décalé en phase et/ou modulé en phase et/ou décalé en temps par rapport au support optique modulé,
des moyens, avec lesquels le signal optique à détecter et/ou le ou les faisceaux lumineux de référence peuvent être orientés de telle sorte qu'ils peuvent être amenés à l'interférence,
et au moins un coupleur, par lequel le signal d'interférence résultant peut être dissocié,
**caractérisé en ce que**
au moins un élément dépendant de la longueur d'onde est prévu, par lequel le ou les angles des faisceaux lumineux amenés à l'interférence sont modifiés en fonction de la longueur d'onde, **en ce qu'**un miroir (30) logé de façon rotative est prévu pour l'ajustage de la longueur d'onde à détecter et
**en ce que** au moins l'un des coupleurs est réalisé ou est en liaison avec un démodulateur et/ou des éléments optiques de telle sorte que le signal dissocié est dépendant de la modulation dans le temps et/ou de la modulation dans l'espace de l'intensité par rapport à l'ensemble ou à des parties de la section de faisceau détectée.

3. Dispositif selon la revendication 1 ou 2, **caractérisé en ce que** les moyens (10, 11, 20, 80) destinés à générer au moins un faisceau lumineux de référence, qui est décalé et/ou modulé en fréquence ou décalé et/ou modulé en phase et/ou décalé en temps par rapport au signal optique à détecter, comportent un diviseur de faisceau et un dispositif de décalage de fréquence et/ou un modulateur de fréquence ou un déphaseur et/ou un modulateur de phase (20) et/ou un tronçon de marche (90).

4. Dispositif selon l'une quelconque ou plusieurs des revendications 1 à 3, **caractérisé en ce que** les moyens pour générer au moins un faisceau lumineux de référence, qui est décalé et/ou modulé en fréquence ou décalé et/ou modulé en phase et/ou décalé en temps par rapport au signal optique à détecter, comportent une source lumineuse locale.

5. Dispositif selon l'une quelconque ou plusieurs des revendications 1 à 4, **caractérisé en ce que** au moins l'un des éléments (11, 12, 14) dépendants de la longueur d'onde comporte un élément optique diffringent, en particulier un réseau (11, 14) optique, un hologramme ou un système de couches minces.

6. Dispositif selon l'une quelconque ou plusieurs des revendications 1 à 5, **caractérisé en ce que** au moins l'un des éléments (11, 12, 14) dépendants de la longueur d'onde comporte un élément optique dispersif, en particulier un prisme (12).

7. Dispositif selon l'une quelconque ou plusieurs des revendications 1 à 6, **caractérisé en ce que** au moins l'un des éléments (11, 12, 14) dépendants de la longueur d'onde est conçu comme diviseur de faisceau (11) ou combineur.

8. Dispositif selon l'une quelconque ou plusieurs des revendications 1 à 7, **caractérisé en ce que** au moins l'un des éléments (11, 12, 14) dépendants de la longueur d'onde est réalisé de telle sorte que la nature ou le degré de dépendance de la déviation d'angle par rapport à la longueur d'onde peut être modifié.

9. Dispositif selon l'une quelconque ou plusieurs des revendications 1 à 8, **caractérisé en ce que** au moins l'un des éléments dépendants de la longueur d'onde est conçu simultanément comme dispositif de décalage de fréquence et/ou modulateur de fréquence ou déphaseur et/ou modulateur de phase.

10. Dispositif selon la revendication 9, **caractérisé en ce que** un ou plusieurs des éléments dépendants de la longueur d'onde est/sont réalisé(s) sous forme de modulateur acousto-optique.

11. Dispositif selon l'une quelconque ou plusieurs des revendications 1 à 10, **caractérisé en ce qu'**il est prévu des moyens par lesquels le faisceau lumineux de référence et/ou le signal optique peut ou peuvent être déviés.

12. Dispositif selon l'une quelconque ou plusieurs des revendications 1 à 11, **caractérisé en ce que** au moins l'un des éléments (11, 12, 14) dépendants de la longueur d'onde est disposé de façon rotative et/ou pivotante.

13. Dispositif selon l'une quelconque ou plusieurs des revendications 1 à 12, **caractérisé en ce que** au moins un hologramme multiplex est prévu et/ou d'autres éléments optiques, par lesquels plusieurs faisceaux peuvent être manipulés simultanément.

14. Dispositif selon l'une quelconque ou plusieurs des revendications 1 à 13, **caractérisé en ce que** des parties du dispositif sont prévues plusieurs fois et/ou plusieurs faisceaux peuvent être manipulés par des parties des dispositifs cités.

15. Dispositif selon l'une quelconque ou plusieurs des revendications 1 à 14, **caractérisé en ce que** des moyens pour la variation de la section de faisceau d'au moins l'un des faisceaux concernés sont prévus.

16. Dispositif selon l'une quelconque ou plusieurs des revendications 1 à 15, **caractérisé en ce que** des moyens pour le filtrage spectral ou la modulation dans l'espace de la phase ou de l'amplitude d'au moins l'un des faisceaux concernés sont prévus.

17. Dispositif selon l'une quelconque ou plusieurs des revendications 1 à 16, **caractérisé en ce que** tous les faisceaux ou une partie des faisceaux concernés sont guidés tous ou partiellement par des fibres optiques, et/ou **en ce que** tous les éléments ou une partie des éléments optiques sont formés par des moyens d'optique intégrée.

18. Utilisation d'un dispositif selon l'une quelconque ou plusieurs des revendications 1 à 17 comme récepteur optique ou modulateur optique et/ou comme spectromètre.
